# EUROPÄISCHE PATENTSCHRIFT

(11) **EP 2 746 704 B1**
(45) Veröffentlichungstag und Bekanntmachung des Hinweises auf die Patenterteilung: **12.02.2020**
(21) Anmeldenummer: 13196786.1
(22) Anmeldetag: 12.12.2013
(51) Int. Cl.: F25D 23/02, F25D 23/08, F25D 21/04

(54) **Haushaltskältegerät mit einem nicht-geradlinig verlaufenden Luftspalt zwischen einer Gefrierfach-Tür und einer benachbarten Gefrierfach-Wand**
Domestic refrigeration device with a non-linear air gap between a freezer compartment door and an adjacent freezer compartment wall
Appareil frigorifique ménager doté d'une fente d'aération non rectiligne entre une porte d'un compartiment de congélation et une porte d'un compartiment de réfrigération adjacent

(30) Priorität: 18.12.2012 DE 102012223647
(43) Veröffentlichungstag der Anmeldung: 25.06.2014
(73) Patentinhaber: BSH Hausgeräte GmbH, 81739 München (DE)
(72) Erfinder: Ciyanoglu, Mehmet, Büyükçekmece 34500 Istanbul (DE); Glaser, Benjamin, 89415 Lauingen (Donau) (DE); Ihle, Hans, 89537 Giengen (DE)

(56) Entgegenhaltungen:
- WO-A1-2007/065554
- DE-U1- 20 000 782
- US-A- 2 703 442

## Beschreibung

Die Erfindung betrifft ein Haushaltskältegerät mit einem Kühlfach, das durch Wände eines Innenbehälters begrenzt und frontseitig durch eine Tür verschließbar ist. Das Haushaltskältegerät umfasst darüber hinaus ein in dem Kühlfach ausgebildetes Gefrierfach, welches durch Gefrierfach-Wände begrenzt ist und frontseitig durch eine eigene Gefrierfach-Tür verschließbar ist. Im geschlossenen Zustand der Gefrierfach-Tür ist zwischen dieser und einer benachbarten Gefrierfach-Wand ein Luftspalt gebildet, der durch die genannten Komponenten begrenzt ist.

Bei derartigen bekannten Kühl-Gefrier-Kombigeräten ist ein Gefrierfach innenliegend in dem Kühlfach ausgebildet.

Das Dokument DE20000782U1 offenbart ein Haushaltskältegerät, gemäß dem Oberbegriff des Anspruchs 1.

Bei diesen Geräten mit innenliegendem Gefrierfach kann es im Bereich der Dichtungsauflage zwischen der Gefrierfach-Tür und einem entsprechenden Wandbereich aufgrund der großen Temperaturgradienten, die beispielsweise mehr als 25° C betragen können, zwischen dem Gefrierbereich und dem Kühlbereich zu Tauwasser oder Eisbildung kommen. Grund hierfür ist der sehr knapp bemessene Bauraum. Bei einem entsprechend ausgelegten Gefrierfachvolumen kommen mehrere Baugruppen und anderes hinzu, die um das Gefrierfach herum angeordnet werden. Beispielsweise ist hier eine Verdampferbaugruppe genannt, die vollständig oder partiell die Wände des Gefrierfachs umhüllt. Eine Gefrierfach-Türbaugruppe ist ebenfalls zu erwähnen, die den Zugang zu dem Gefrierfach ermöglicht. Darüber hinaus seien sogenannte Türabstellerbaugruppen genannt, wie beispielsweise ein Butterfach oder ein Tubenabsteller oder feste Absteller auf der Türinnenplatte, wobei dies abhängig vom Gerätetyp ist. Ferner ist auch noch der Isolierschaum um das Gefrierfach zu nennen, das von der Umgebung zu isolieren ist. Häufig ist auch über dem Gefrierfach eine Elektronikbaugruppe angeordnet, die einen Mindestabstand zu dem Gefrierfach hat.

Die bereits oben genannten Temperaturgradienten führen in der Praxis häufig zu einer Betauung oder dem Gefrieren der Dichtflächen. Dadurch entstehen Nachteile für einen Nutzer während dem Gebrauch des Geräts. Beispielsweise können hierbei die Dichtungen einfrieren und dadurch das Öffnen dieser innenliegenden Gefrierfach-Tür erheblich erschwert sein. Darüber hinaus ist das Gerät durch das Entstehen von Kondenswasser häufiger zu reinigen und dabei das entstandene Wasser abzuwischen. Darüber hinaus wird von einem Nutzer das Berühren einer nassen Oberfläche als unangenehm empfunden, was insbesondere im Bereich des Griffs der Gefrierfach-Tür auftreten kann. In dem genannten Luftspalt zwischen der Gefrierfach-Tür und einer Gefrierfach-Wand wird ein Bereich gebildet, in dem sich stehende Luft hält. Dadurch wird quasi der Wärmeaustausch zwischen dem Gefrierfach und dem Kühlfach reduziert.

Es ist Aufgabe der vorliegenden Erfindung, ein Haushaltskältegerät zu schaffen, bei welchem ein in einem Kühlfach innenliegendes Gefrierfach so ausgebildet ist, dass ein Wärmeaustausch zwischen den beiden Fächern minimiert ist.

Die vorliegende Erfindung ist im unabhängigen Anspruch 1 offenbart. Weitere Ausgestaltungen sind in den abhängigen Ansprüchen offenbart.

Ein erfindungsgemäßes Haushaltskältegerät zur Aufnahme und Lagerung von Lebensmitteln umfasst ein Kühlfach, das durch Wände eines Innenbehälters begrenzt und frontseitig durch eine Tür verschließbar ist. Das Haushaltskältegerät umfasst neben dem Kühlfach auch ein Gefrierfach, welches in dem Kühlfach innenliegend ausgebildet ist. Das Gefrierfach ist durch Gefrierfach-Wände begrenzt und frontseitig durch eine eigene Gefrierfach-Tür verschließbar. Im geschlossenen Zustand der Gefrierfach-Tür ist zwischen dieser und zumindest einer benachbarten Gefrierfach-Wand ein Luftspalt gebildet und dieser somit auch seitlich durch die Gefrierfach-Tür und die Gefrierfach-Wand auch entsprechend begrenzt. Ein wesentlicher Gedanke der Erfindung ist darin zu sehen, dass der Luftspalt zumindest in einer einem Innenraum des Gefrierfachs zugewandten Längenhälfte einen ungerade verlaufenden Luftspaltabschnitt aufweist. Durch eine derartige Ausgestaltung wird die Länge des Luftspalts vergrößert, so dass das Volumen für eine sich darin ansammelnde stehende Luft vergrößert ist. Dadurch wird der Isolationseffekt erhöht und der Wärmeaustausch zwischen dem Gefrierfach und dem Kühlfach deutlich reduziert. Darüber hinaus ist gerade durch einen derartig ungerade verlaufenden Luftspaltbereich nicht nur dessen Länge vergrößert, sondern auch eine Ausgestaltung erreicht, bei der das Volumen des Gefrierfachs praktisch nicht verkleinert ist. Denn es ist nicht erforderlich, die Dicke der Gefrierfach-Tür zu vergrößern, um einen bekannten, ausschließlich geradlinigen Luftspalt zu verlängern. Bei ansonsten gleichbleibenden Bauteilausmaßen wird somit durch die erfindungsgemäße Luftspaltgeometrie die Länge gegenüber ausschließlich geradlinigen Luftspalten verlängert und somit das Volumen vergrößert.

Vorzugsweise ist vorgesehen, dass der Verlauf des Luftspaltabschnitts zumindest eine Richtungsänderung aufweist. Dadurch wird eine relativ einfache Geometrie geschaffen, die dennoch eine Verlängerung des Luftspalts bewirkt, andererseits jedoch keine komplexen Geometrien der Gefrierfach-Tür und der Gefrierfach-Wand, die den Luftspalt begrenzen, hervorrufen. Dadurch ist auch die Herstellung dieser den Luftspalt und auch somit den Luftspaltabschnitt begrenzenden Bauteile einfach und relativ kostengünstig.

Vorzugsweise ist vorgesehen, dass die Richtungsänderung in einem Winkel zwischen 20° und 120°, vorzugsweise zwischen 85° und 95°, beträgt. Die oben genannten Vorteile sind dadurch besonders begünstigt.

Vorzugsweise ist vorgesehen, dass der ungerade Verlauf des Luftspaltabschnitts durch zumindest eine Stufe in der zur Gefrierfach-Tür benachbarten und den Luftspalt begrenzenden Gefrierfach-Wand gebildet ist.

Insbesondere ist zumindest eine Stufe in der Gefrierfach-Wand einstückig ausgebildet. Insbesondere ist eine derartige Gefrierfach-Wand aus Kunststoff ausgebildet, vorzugsweise durch einen Tiefziehprozess erzeugt. Dadurch lässt sich einfach während des Herstellungsverfahrens eine grundsätzliche zusätzliche Verformung und Geometrie mit der Stufe erzeugen. Die dadurch bewirkte geometrische und gegenständliche Gestalt der Gefrier-Wand zur Herstellung des ungerade verlaufenden Luftspaltabschnitts ist dadurch auch sehr präzise möglich. Darüber hinaus ist durch eine derartige einstückige Ausgestaltung in einem solchen Kunststoffteil eine Ausbildung ohne Positionstoleranzen erreicht, und die erzeugte Stufe auch dauerhaft positionssicher beibehalten.

Vorzugsweise ist vorgesehen, dass die Gefrierfach-Wand mit der zumindest einen Stufe ein Tiefziehbauteil ist.

Vorzugsweise ist vorgesehen, dass ein ungerader Luftspaltabschnitt zwischen einer unteren Wand der Gefrierfach-Tür und einer unteren Wand des Gefrierfachs und/oder zwischen zumindest einer seitlichen Wand der Gefrierfach-Tür und einer seitlichen Wand des Gefrierfachs ausgebildet ist. Sehr ortsspezifiziert ist dadurch diese Verlängerung und spezifische geometrische Gestaltung des Luftspalts gebildet. Vorteilhaft ist es dabei, dass an beiden seitlichen und somit vertikalen Wänden des Gefrierfachs und der Gefrierfach-Tür eine derartige ungeradlinige Ausgestaltung eines Luftspaltabschnitts vorgesehen ist.

Besonders vorteilhaft ist eine derartige Ausgestaltung eines ungeraden Luftspaltabschnitts insbesondere im Bereich einer unteren Wand des Gefrierfachs und einer unteren Wand der Gefrierfach-Tür. Denn die kalte Luft tritt aufgrund der Temperaturschichtung verstärkt in diesem unteren Bereich des Gefrierfachs auf und der Temperaturgradient in Richtung des Kühlfachs hin ist dort am größten. Gerade dort ist somit mit verstärkter Ausbildung der oben genannten Probleme zu rechnen, so dass gerade dort die erfindungsgemäße Ausgestaltung mit einem ungerade verlaufenden Luftspaltabschnitt besonders vorteilhaft ist.

Vorzugsweise ist vorgesehen, dass ein dem Innenraum zugewandtes Ende des Luftspaltabschnitts das hintere Ende des Luftspalts ist und ein Austritt des Luftspaltabschnitts in einer Horizontalschnittbetrachtung des Haushaltskältegeräts durch eine hintere, in Breitenrichtung des Haushaltskältegeräts orientierte Wand der Gefrierfach-Tür und einen in Breitenrichtung des Haushaltskältegeräts orientierten Wandabschnitt einer seitlichen Wand des Gefrierfachs begrenzt ist. Bei einer derartigen Ausgestaltung ist somit der Austritt des Luftspaltabschnitts quasi in Richtung der gegenüberliegenden seitlichen Wand des Gefrierfachs gerichtet.

Vorzugsweise ist bei einer derartigen Ausgestaltung vorgesehen, dass der Verlauf des Luftspaltabschnitts nur eine einzige, insbesondere gestufte, Richtungsänderung aufweist.

Bei einer alternativen bevorzugten Ausgestaltung ist vorgesehen, dass ein dem Innenraum des Gefrierfachs zugewandtes Ende des Luftspaltabschnitts das hintere Ende des Luftspalts ist und ein Austritt des Luftspaltabschnitts in einer Horizontalschnittbetrachtung des Haushaltskältegeräts durch einen hinteren, in Tiefenrichtung des Haushaltskältegeräts orientierten Wandabschnitt einer hinteren Wand der Gefrierfach-Tür und einen in Tiefenrichtung des Haushaltskältegeräts orientierten Wandabschnitt einer seitlichen Wand des Gefrierfachs begrenzt ist. Bei einer derartigen Ausgestaltung ist der Austritt somit in Richtung einer Rückwand der das Gefrierfach begrenzenden Wandausgestaltung gerichtet.

Vorzugsweise ist bei einer derartigen Ausgestaltung vorgesehen, dass der Verlauf des Luftspaltabschnitts zwei, insbesondere gestufte, Richtungsänderungen aufweist.

Vorzugsweise ist vorgesehen, dass der Innenbehälter mit den das Kühlfach begrenzenden Wänden und den Gefrierfach-Wänden einstückig, insbesondere als Tiefziehbauteil, ausgebildet ist.

Vorzugsweise ist vorgesehen, dass ein dem Innenraum abgewandtes vorderes Ende des Luftspalts im geschlossenen Zustand der Gefrierfach-Tür durch eine Dichtung zwischen der Gefrierfach-Tür und einer Wand des Gefrierfachs begrenzt ist. Es kann vorgesehen sein, dass die Dichtung so angeordnet ist, dass ein vorderes Ende dieses Luftspalts ebenfalls in einem gewissen Abschnitt ungerade verlaufend ausgebildet ist. Bevorzugt ist hier jedoch keine diskrete Stufe und somit keine Richtungsänderung in einem Winkel zwischen vorzugsweise 85 und 95° gestaltet, sondern lediglich eine leichte eckenfreie Bogenführung ausgebildet.

Die vorstehend genannten Merkmale und Merkmalskombinationen als auch die in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung, gemäß Anspruch 1, zu verlassen. Daher sind auch Ausführungsbeispiele von der Erfindung umfasst, die nicht explizit erläutert sind, jedoch durch entsprechende offenbarte Merkmalskombinationen generierbar sind.

Ausführungsbeispiele der Erfindung werden nachfolgend anhand schematischer Zeichnungen näher erläutert. Es zeigen:
- Fig. 1: eine perspektivische Darstellung von Teilkomponenten eines erfindungsgemäßen Haushaltskältegeräts;
- Fig. 2: eine Seitenansicht eines Innenbehälters des erfindungsgemäßen Haushaltskältegeräts;
- Fig. 3: eine vergrößerte Darstellung eines Teilbereichs des Innenbehälters gemäß Fig. 3;
- Fig. 4: eine Schnittdarstellung eines Ausführungsbeispiels eines erfindungsgemäßen Haushaltskältegeräts im Bereich einer Gefrierfach-Tür und einer Gefrierfach-Wand im geschlossenen Zustand der Gefrierfach-Tür;
- Fig. 5: eine vergrößerte Darstellung des Ausschnitts I gemäß Fig. 4;
- Fig. 6: eine im Unterschied zur Vertikalschnittdarstellung gemäß Fig. 4 bzw. 5 gezeigte Horizontalschnittdarstellung des Haushaltskältegeräts im Bereich der Gefrierfach-Tür und einer Gefrierfach-Wand bei geschlossener Gefrierfach-Tür;
- Fig. 7: ein weiteres Ausführungsbeispiel eines erfindungsgemäßen Haushaltskältegeräts in einer Horizontalschnittdarstellung im Bereich einer Gefrierfach-Tür und einer Gefrierfach-Wand bei geschlossener Gefrierfach-Tür; und
- Fig. 8: eine Frontansicht des Gefrierfachs gemäß einem Ausführungsbeispiel mit spezifisch geformten Gefrierfach-Wänden.

In den Figuren werden gleiche oder funktionsgleiche Elemente mit den gleichen Bezugszeichen versehen.

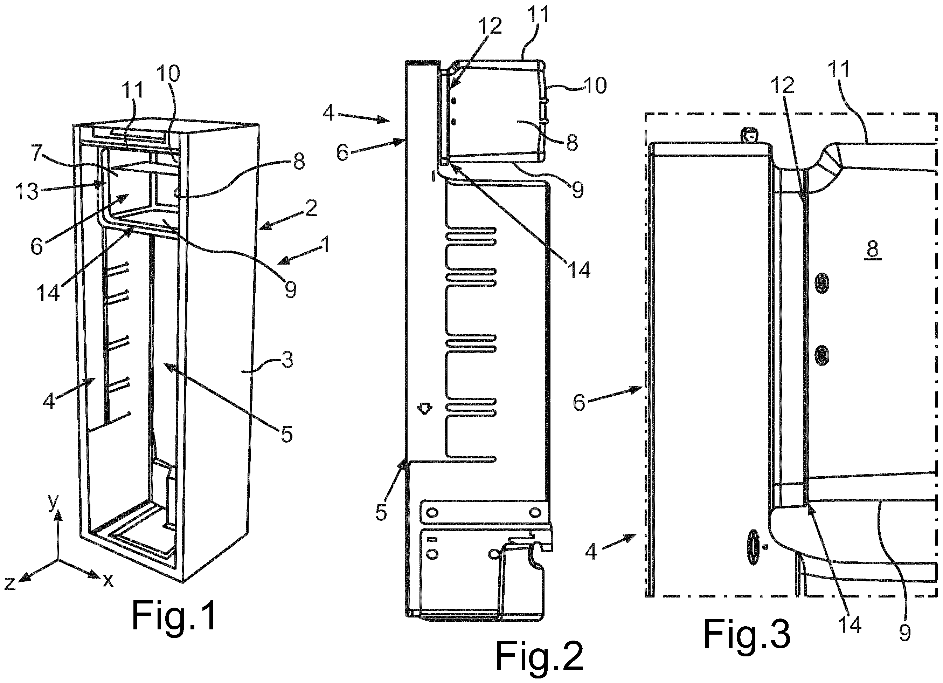

In Fig. 1 ist in einer perspektivischen Darstellung ein Haushaltskältegerät 1 gezeigt, wobei davon nur einige Komponenten dargestellt sind. Das Haushaltskältegerät 1 ist ein Kühl-Gefrier-Kombigerät zur Aufnahme und Lagerung von Lebensmitteln. Es umfasst ein Gehäuse 2 mit einem Außenbehälter 3. In dem Außenbehälter 3 ist ein Innenbehälter 4 angeordnet, der einstückig als Tiefziehbauteil hergestellt ist. Der Innenbehälter 4 begrenzt mit seinen Wänden ein Kühlfach 5. In dem Volumen des Kühlfachs 5 und somit auch im Innenbehälter 4 ist ein Gefrierfach 6 ausgebildet. Das Gefrierfach 6 ist durch Gefrierfachwände 7, 8, welche Vertikalwände darstellen, sowie eine Bodenwand 9, eine Rückwand 10 und eine Deckenwand 11 begrenzt. Das Gefrierfach 6 ist frontseitig durch eine nicht dargestellte Gefrierfach-Tür verschließbar. Die Gefrierfach-Tür ist dann nach innen liegend im Kühlfach 5 angeordnet, wobei das Kühlfach 5 und diese Gefrierfach-Tür frontseitig durch eine nicht dargestellte weitere Tür verschließbar sind.

In Fig. 2 ist eine Seitenansicht des Innenbehälters 4 dargestellt. Wie bereits in Fig. 2 zu erkennen ist, weisen im gezeigten Ausführungsbeispiel die vertikalen Wände 7 und 8 als auch die Bodenwand 9 in einem vorderen Bereich Stufen 12, 13 (Fig. 1) und 14 auf. Dadurch werden spezifisch geformte Wandbereiche gebildet, die, wie nachfolgend noch erläutert wird, einen Luftspaltabschnitt eines Luftspalts zwischen einer derartigen Wand und einer Gefrierfach-Tür begrenzen.

In Fig. 3 ist eine vergrößerte Darstellung des Innenbehälters 4 im Bereich des Gefrierfachs 6 und den genannten Stufen 12 bis 14 dargestellt.

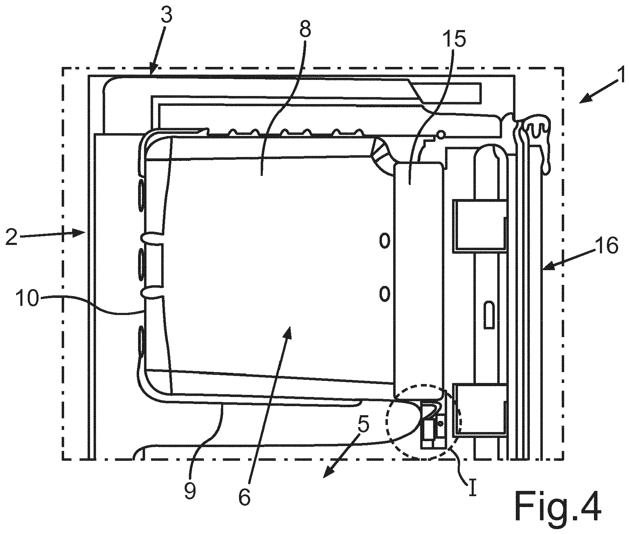

In Fig. 4 ist in einer Schnittdarstellung das Haushaltskältegerät 1 in einem oberen Bereich und somit im Bereich des Gefrierfachs 6 dargestellt.

Die Gefrierfach-Tür 15 ist im geschlossenen Zustand gezeigt. Darüber hinaus ist auch die Tür 16 zum frontseitigen Verschließen des Kühlfachs 4 und auch zum Abdecken der Gefrierfach-Tür 15 im geschlossenen Zustand dargestellt.

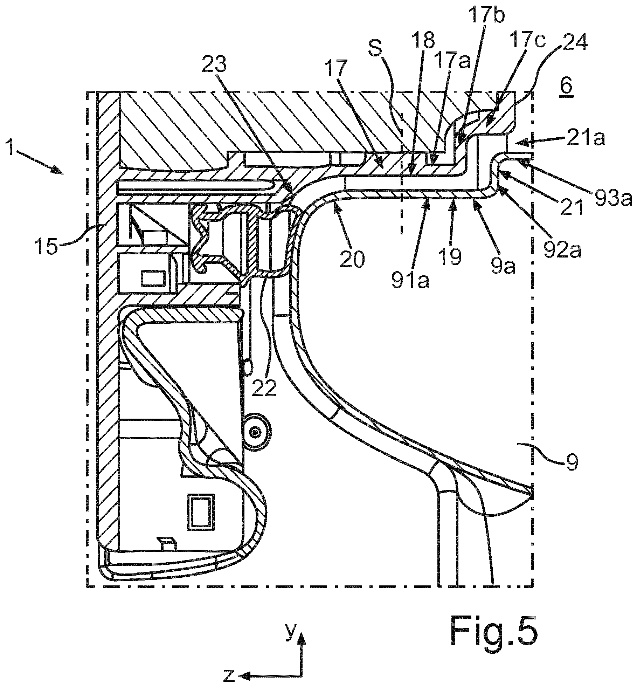

In Fig. 5 ist in einer vergrößerten Darstellung der Ausschnitt I in Fig. 4 gezeigt. Die Schnitte in Fig. 4 und Fig. 5 sind Vertikalschnitte und sind somit in der y-z-Ebene gezeigt.

In dem gezeigten geschlossenen Zustand der Gefrierfach-Tür 15 ist in der Darstellung gemäß Fig. 5 zwischen einer unteren Wand, die durch die Bodenwand 9 gebildet ist, und einer unteren Wand 17 der Gefrierfach-Tür 15 ein Luftspalt 18 ausgebildet.

Der Luftspalt 18 ist zumindest in einer einem Innenraum des Gefrierfachs 6 zugewandten (und somit in negativer z-Richtung betrachtet) Längenhälfte 19, die sich an eine vordere, dem Gefrierfach 6 abgewandte Längenhälfte 20 nach hinten anschließt, mit einem ungerade verlaufenden Luftspaltabschnitt 21 ausgebildet. Dieser Luftspaltabschnitt 21 weist in der gezeigten Ausführung gemäß Fig. 5 zwei Richtungsänderungen auf. Der Luftspalt 20 wird als solches durch die Oberseite 9a der Bodenwand 9 und der dazu beabstandeten Wand 17 der Gefrierfach-Tür 15 begrenzt.

Der Luftspaltabschnitt 21 ist so gestaltet, dass sein Verlauf durch zumindest eine Stufe in der zur Gefrierfach-Tür 15 benachbarten und den Luftspalt 18 begrenzenden Gefrierfach-Wand bzw. der Bodenwand 9 gebildet ist.

Die zumindest eine Stufe, insbesondere die zwei Stufen, sind in der Gefrierfach-Wand bzw. der Bodenwand 9 einstückig ausgebildet.

Dazu ist vorgesehen, dass sich die Oberseite 9a entsprechend gestuft ausbildet und einen ersten, im Wesentlichen horizontal (in z-Richtung) verlaufenden Abschnitt 91a, und einen daran im Wesentlichen in einem Winkel zwischen 85° und 95° anschließenden vertikalen (in y-Richtung) Abschnitt 92a aufweist, der dann wiederum in einen dazu im Wesentlichen zwischen 85° und 95° anschließenden und somit im Wesentlichen horizontal (in z-Richtung) orientierten weiteren Abschnitt 93a übergeführt ist.

Entsprechend ist die untere Wand 17 geformt. Sie weist einen ersten, im Wesentlichen parallel zum Abschnitt 91a verlaufenden Abschnitt 17a, und einen daran im Wesentlichen zwischen 85° und 95° vertikal nach oben anschließenden weiteren Abschnitt 17b auf, der dann wiederum in einen im Wesentlichen in einem Winkel zwischen 85° und 95° dazu orientierten Abschnitt 17c übergeht.

Dieser Abschnitt 17c mündet dann in eine Rückwand 24 der Gefrierfach-Tür 15. Diese Rückwand 24 ist im Wesentlichen vertikal orientiert und dem Gefrierfach 6 bzw. dessen Innenraum direkt zugewandt.

Wie darüber hinaus zu erkennen ist, umfasst die Gefrierfach-Tür 15 eine Dichtung 22, die im geschlossenen Zustand der Gefrierfach-Tür 15 an einer Vorderseite der Bodenwand 9 anliegt. Wie darüber hinaus in Fig. 5 zu erkennen ist, ist ein vorderes und somit der Dichtung 22 zugewandtes Ende 23 des Luftspalts 18 stufenfrei ausgebildet, jedoch ebenfalls mit einem ungeraden Verlauf gestaltet, der bogenförmig nach unten orientiert ist. Diese Ausgestaltung des Luftspalts 18 ist im vorderen Bereich und somit in der Längenhälfte 20, die dem Gefrierfach 6 abgewandt ist, ausgebildet. Lediglich symbolhaft ist durch die gestrichelte Linie S eine Separierung zwischen den Längenhälften 19 und 20 grafisch dargestellt.

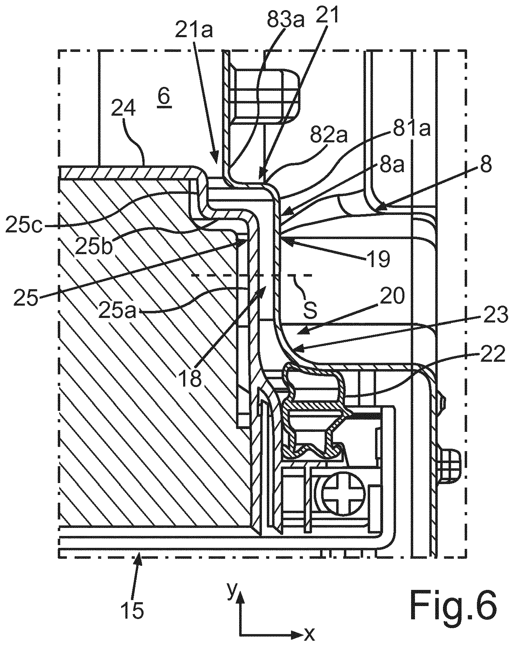

In Fig. 6 ist in einer Horizontalschnittdarstellung und somit in einer Schnittebene gemäß der x-z-Ebene ein Ausschnitt des Haushaltskältegeräts 1 im Bereich der Gefrierfach-Tür 15, die geschlossen dargestellt ist, und der vertikalen Seitenwand 8 gezeigt. Bei dieser Ausführung ist analog zur Darstellung in Fig. 5 ein zweifach gestufter Luftspaltabschnitt 21 gezeigt. Im Übrigen gelten die Ausführungen, wie sie zu Fig. 5 bereits erfolgt sind.

Der Luftspalt 18 ist hier zwischen der vertikalen seitlichen Wand 8 des Gefrierfachs 6 und einer seitlichen Wand 25 der Gefrierfach-Tür 15 gebildet. Auch hier ist für den mehrfach gestuften Luftspaltabschnitt 21 ein begrenzter Wandbereich 8a mit den Abschnitten 81a, 82a und 83a ausgebildet, die funktionell den Abschnitten 91a bis 93a entsprechen.

Analog sind auch gegenüberliegende Abschnitte 25a, 25b und 25c der Wand 25 ausgebildet, die funktionell den Abschnitten 17a bis 17c entsprechen.

Es kann somit vorgesehen sein, dass ein derartiger Luftspaltabschnitt sowohl in einem unteren Bereich zwischen der Gefrierfach-Tür 15 und der Bodenwand 9 und/oder zwischen zumindest einer seitlichen Wand 25 der Gefrierfach-Tür 15 und einer seitlichen Wand 7 und/oder 8 des Gefrierfachs 6 gebildet ist. Vorzugsweise ist vorgesehen, dass eine derartige Gestaltung eines Luftspaltabschnitts 21 sowohl in einem unteren Bereich gemäß Fig. 5 als auch in beiden gegenüberliegenden vertikalen Abschnitten gemäß Fig. 6 ausgebildet ist.

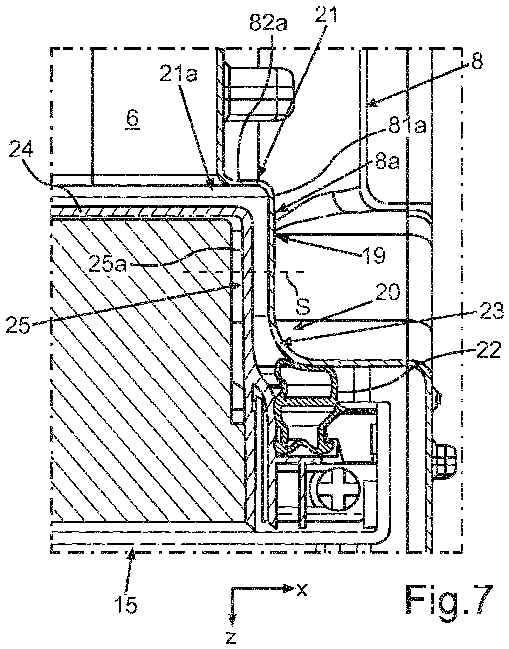

In Fig. 7 ist in einer weiteren Horizontalschnittdarstellung und somit in einer Schnittdarstellung in der x-z-Ebene eine alternative Ausgestaltung des Luftspaltabschnitts 21 gezeigt. Im Unterschied zu den Ausgestaltungen gemäß Fig. 5 und Fig. 6 ist hier ein einfach gestufter Luftspaltabschnitt 21 gebildet. Bei der Ausführung in Fig. 5 und Fig. 6 ist ein Austritt 21a des Luftspaltabschnitts 21 in Richtung der Rückwand 10 gerichtet. Bei der Ausführung in Fig. 7 hingegen ist dieser Austritt 21a in Richtung der gegenüberliegenden vertikalen Wand 7 orientiert. Bei dieser Ausführung sind somit nur ein Abschnitt 25a der seitlichen Wand 25 und ein Teilbereich der Rückwand 24 der Gefrierfach-Tür 15 zur Begrenzung des Luftspaltabschnitts 21 beitragend. Auch bei dem Wandabschnitt 8a der Seitenwand 8 sind nur Abschnitte 81a und 82a, die in einem Winkel zwischen 85° und 95° zueinander orientiert sind, als Begrenzung zum Luftspaltabschnitt 21 ausgebildet.

Bei der Ausgestaltung in Fig. 7 ist somit vorgesehen, dass sich der Luftspaltabschnitt 21 in Tiefenrichtung und somit in z-Richtung betrachtet hinter die Rückwand 24 erstreckt und ausbildet. Dies ist bei der Ausgestaltung in Fig. 5 und Fig. 6 nicht der Fall.

Auch diese Ausgestaltung gemäß Fig. 7 kann zusätzlich oder anstatt dazu auch auf der gegenüberliegenden vertikalen Wand 7 und der Gefrierfach-Tür 15 und/oder zwischen der Gefrierfach-Tür 15 und der Bodenwand 9 entsprechend ausgebildet sein.

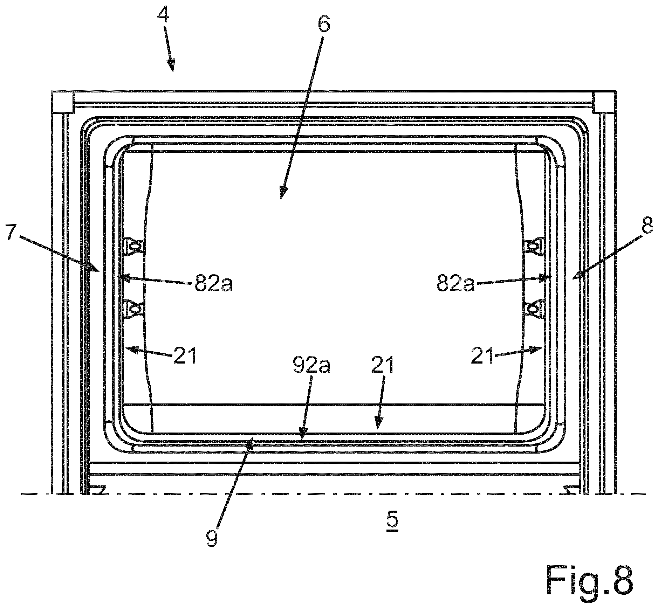

In der Darstellung gemäß Fig. 8 ist eine Frontansicht der Darstellung in Fig. 3 gezeigt, so dass direkt in das Innere des Gefrierfachs 6 geblickt wird. Bei dieser Ausführung ist vorgesehen, dass sowohl bei der Bodenwand 9 als auch den Seitenwänden 7 und 8 entsprechende Stufen in den Wänden ausgebildet sind, so dass an drei der vier begrenzenden Seiten Luftspaltabschnitte gemäß Fig. 5 und 6 oder gemäß Fig. 7 ausgebildet sind.

Durch die erfindungsgemäße Ausgestaltung eines in der hinteren Längenhälfte vorgesehenen ungerade verlaufenden Luftspaltabschnitt 21 kann ein im Vergleich zu einem lediglich geradlinigen Spalt eine längere Ausgestaltung des Luftspalts 18 erzielt werden, wodurch die stehende Luftmenge vergrößert werden kann und somit ein Isolationseffekt verbessert wird. Der Wärmeaustausch zwischen dem Gefrierfach 6 und dem Kühlfach 5 ist dadurch deutlich reduziert. Darüber hinaus ist es durch eine derartige Ausgestaltung eines Luftspalts 18 mit einem spezifizierten Luftspaltabschnitt 21 auch möglich, die Dicke der Gefrierfach-Tür 15 zu reduzieren. Dadurch kann sogar der Innenraum und somit das Volumen des Gefrierfachs 6 vergrößert werden. Darüber hinaus kann ein kostengünstigeres Isolationsmaterial bei eventuell gleicher Dicke der Gefrierfach-Tür 15 benutzt werden. Beispielsweise kann hier ein Wechsel von dem Isolationsmaterial PUR (Polyurethan) auf EPS (Polystyrol) erfolgen. Durch die insbesondere einstückige Ausgestaltung dieser gestuften Form der Wände zum Begrenzen des ungeraden Luftspaltabschnitts 21 kann die Fertigung sehr schnell und kostengünstig erfolgen. Nicht zuletzt wird durch diese spezifische Gestaltung des Luftspalts 18 eine Steigerung der Energieeffizienz des gesamten Haushaltskältegeräts 1 erreicht. Darüber hinaus ist die spezifische Position und Stelle dieses ungeraden Luftspaltabschnitts 21 im Bereich eines Schaummaterials erzeugt, wodurch das Nutzvolumen des Gefrierfachs 6 nicht reduziert wird. Insbesondere kann somit eine Betauung im Bereich eines Griffs, der in einem unteren Bereich der Gefrierfach-Tür 15 ausgebildet ist, verhindert werden. Auch ist eine Betauung im Bereich der Dichtung 22 zwischen der Gefrierfach-Tür 15 und den Wänden verhindert.

### Bezugszeichenliste

- 1: Haushaltskältegerät
- 2: Gehäuse
- 3: Außenbehälter
- 4: Innenbehälter
- 5: Kühlfach
- 6: Gefrierfach
- 7: Gefrierfachwand
- 8: Gefrierfachwand
- 8a: Wandabschnitt
- 9: Bodenwand
- 9a: Oberseite
- 10: Rückwand
- 11: Deckenwand
- 12: Stufe
- 13: Stufe
- 14: Stufe
- 15: Gefrierfach-Tür
- 16: Tür
- 17: Wand
- 17a: Abschnitt
- 17b: Abschnitt
- 17c: Abschnitt
- 18: Luftspalt
- 19: Längenhälfte
- 20: Längenhälfte
- 21: Luftspaltabschnitt
- 21a: Austritt
- 22: Dichtung
- 23: Ende
- 24: Rückwand
- 25: Seitliche Wand
- 25a: Abschnitt
- 25b: Abschnitt
- 25c: Abschnitt

- 81a: Abschnitt
- 82a: Abschnitt
- 83a: Abschnitt
- 91a: Abschnitt
- 92a: Abschnitt
- 93a: Abschnitt

## Patentansprüche

1. Haushaltskältegerät (1) mit einem Kühlfach (5), das durch Wände eines Innenbehälters (4) begrenzt und frontseitig durch eine Tür (16) verschließbar ist, und einem in dem Kühlfach (5) ausgebildeten Gefrierfach (6), welches durch Gefrierfach-Wände (7 bis 11) begrenzt ist und frontseitig durch eine Gefrierfach-Tür (15) verschließbar ist, wobei das Gefrierfach (6) in dem Kühlfach (5) innenliegend ausgebildet ist, wobei das Kühlfach (5) und die Gefrierfach-Tür (15) frontseitig durch die zum frontseitigen Verschließen des Kühlfachs (5) und zum Abdecken der Gefrierfach-Tür (15) ausgebildete Tür (16) verschließbar sind, und wobei im geschlossenen Zustand der Gefrierfach-Tür (15) zwischen dieser und zumindest einer benachbarten Gefrierfach-Wand (7 bis 11) ein Luftspalt (18) gebildet und begrenzt ist, **dadurch gekennzeichnet, dass** der Luftspalt (18) zumindest in einer einem Innenraum des Gefrierfachs (6) zugewandten Längenhälfte (19) einen ungerade verlaufenden Luftspaltabschnitt (21) aufweist.

2. Haushaltskältegerät (1) nach Anspruch 1, **dadurch gekennzeichnet, dass** der Verlauf des Luftspaltabschnitts (21) zumindest eine Richtungsänderung aufweist.

3. Haushaltskältegerät (1) nach Anspruch 2, **dadurch gekennzeichnet, dass** die Richtungsänderung in einem Winkel zwischen 20° und 120°, insbesondere zwischen 85° und 95°, ausgebildet ist.

4. Haushaltskältegerät (1) nach einem der vorhergehenden Ansprüche, **dadurch gekennzeichnet, dass** der ungerade Verlauf des Luftspaltabschnitts (21) durch zumindest eine Stufe in der zur Gefrierfach-Tür (15) benachbarten und den Luftspalt (18) begrenzenden Gefrierfach-Wand (7, 8, 9) gebildet ist.

5. Haushaltskältegerät (1) nach Anspruch 4, **dadurch gekennzeichnet, dass** die zumindest eine Stufe in die Gefrierfach-Wand (7, 8, 9) einstückig ausgebildet ist.

6. Haushaltskältegerät (1) nach Anspruch 5, **dadurch gekennzeichnet, dass** die Gefrierfach-Wand (7, 8, 9) mit der zumindest einen Stufe ein Tiefziehbauteil ist.

7. Haushaltskältegerät (1) nach einem der vorhergehenden Ansprüche, **dadurch gekennzeichnet, dass** ein ungerader Luftspaltabschnitt (21) zwischen einer unteren Wand (17) der Gefrierfach-Tür (15) und einer unteren Wand (9) des Gefrierfachs (6) und/oder zwischen zumindest einer seitlichen Wand (25) der Gefrierfach-Tür (15) und einer seitlichen Wand (7, 8) des Gefrierfachs (6) ausgebildet ist.

8. Haushaltskältegerät (1) nach einem der vorhergehenden Ansprüche, **dadurch gekennzeichnet, dass** ein dem Innenraum des Gefrierfachs (6) zugewandtes Ende des Luftspaltabschnitts (21) das hintere Ende des Luftspalts (18) ist und ein Austritt (21a) des Luftspaltabschnitts (21) in einer Horizontalschnittbetrachtung durch eine hintere, in Breitenrichtung (x-Richtung) des Haushaltskältegeräts (1) orientierte Wand (24) der Gefrierfach-Tür (15) und einen in Breitenrichtung des Haushaltskältegeräts (1) orientierten Wandabschnitt (82a) einer seitlichen Wand (8) des Gefrierfachs (6) begrenzt ist.

9. Haushaltskältegerät (1) nach Anspruch 8, **dadurch gekennzeichnet, dass** der Verlauf des Luftspaltabschnitts (21) nur eine einzige, insbesondere gestufte, Richtungsänderung aufweist.

10. Haushaltskältegerät (1) nach einem der Ansprüche 1 bis 7, **dadurch gekennzeichnet, dass** ein dem Innenraum des Gefrierfachs (6) zugewandtes Ende des Luftspaltabschnitts (21) das hintere Ende des Luftspalts (18) ist und ein Austritt (21a) des Luftspaltabschnitts (21) in einer Horizontalschnittbetrachtung durch einen hinteren, in Tiefenrichtung (z-Richtung) des Haushaltskältegeräts (1) orientierten Wandabschnitt (25c) einer seitlichen Wand (25) der Gefrierfach-Tür (15) und einen in Tiefenrichtung des Haushaltskältegeräts (1) orientierten Wandabschnitt (83a) einer seitlichen Wand (8) des Gefrierfachs (8) begrenzt ist.

11. Haushaltskältegerät (1) nach Anspruch 10, **dadurch gekennzeichnet, dass** der Verlauf des Luftspaltabschnitts (21) zwei, insbesondere gestufte, Richtungsänderungen aufweist.

12. Haushaltskältegerät (1) nach einem der vorhergehenden Ansprüche, **dadurch gekennzeichnet, dass** der Innenbehälter (4) mit den das Kühlfach (5) begrenzenden Wänden und den Gefrierfach-Wänden (7 bis 11) einstückig, insbesondere als Tiefziehbauteil, ausgebildet ist.

13. Haushaltskältegerät (1) nach einem der vorhergehenden Ansprüche, **dadurch gekennzeichnet, dass** ein dem Innenraum des Gefrierfachs (6) abgewandtes vorderes Ende des Luftspalts (18) im geschlossenen Zustand der Gefrierfach-Tür (15) durch eine Dichtung (22) zwischen der Gefrierfach-Tür (15) und einer Gefrierfach-Wand (7 bis 11) begrenzt ist.

## Claims

1. Household refrigeration appliance (1) with a refrigerator compartment (5) which is bounded by walls of an inner container (4) and can be closed at the front by a door (16), and a freezer compartment (6) embodied in the refrigerator compartment (5), which is bounded by freezer compartment walls (7 to 11) and can be closed at the front by a freezer compartment door (15), wherein the freezer compartment (6) is embodied inside the refrigerator compartment (5), wherein the refrigerator compartment (5) and the freezer compartment door (15) can be closed at the front by the door (16) which is embodied to close the freezer compartment (5) at the front and to cover the freezer compartment door (15), and wherein in the closed state of the freezer compartment door (15) an air gap (18) is formed and bounded between this and at least one adjacent freezer compartment wall (7 to 11), **characterised in that** the air gap (18) has a non-linear air gap portion (21) at least in a longitudinal half (19) facing an interior of the freezer compartment (6).

2. Household refrigeration appliance (1) according to claim 1, **characterised in that** the course of the air gap portion (21) has at least one change in direction.

3. Household refrigeration appliance (1) according to claim 2, **characterised in that** the change in direction is embodied at an angle between 20° and 120°, in particular between 85° and 95°.

4. Household refrigeration appliance (1) according to one of the preceding claims, **characterised in that** the non-linear course of the air gap portion (21) is formed by at least one step in the freezer compartment wall (7, 8, 9) adjacent to the freezer compartment door (15) and bounding the air gap (18).

5. Household refrigeration appliance (1) according to claim 4, **characterised in that** the at least one step is embodied in one piece in the freezer compartment wall (7, 8, 9).

6. Household refrigeration appliance (1) according to claim 5, **characterised in that** the freezer compartment wall (7, 8, 9) with the at least one step is a deep-drawn component.

7. Household refrigeration appliance (1) according to one of the preceding claims, **characterised in that** an non-linear air gap portion (21) is embodied between a lower wall (17) of the freezer compartment door (15) and a lower wall (9) of the freezer compartment (6) and/or between at least one lateral wall (25) of the freezer compartment door (15) and a lateral wall (7, 8) of the freezer compartment (6).

8. Household refrigeration appliance (1) according to one of the preceding claims, **characterised in that** an end of the air gap portion (21) facing the interior of the freezer compartment (6) is the rear end of the air gap (18) and an outlet (21a) of the air gap portion (21) is bounded viewed in a horizontal section by a rear wall (24) of the freezer compartment door (15) oriented in the width direction (x-direction) of the household refrigeration appliance (1) and by a wall portion (82a) of a lateral wall (8) of the freezer compartment (6) oriented in the width direction of the household refrigeration appliance (1).

9. Household refrigeration appliance (1) according to claim 8, **characterised in that** the course of the air gap portion (21) only has a single, in particular stepped change in direction.

10. Household refrigeration appliance (1) according to one of claims 1 to 7, **characterised in that** an end of the air gap portion (21) facing the interior of the freezer compartment (6) is the rear end of the air gap (18) and an outlet (21a) of the air gap portion (21) viewed in a horizontal section is bounded by a rear wall portion (25c) of a lateral wall (25) of the freezer compartment door (15) oriented in the depth direction (z-direction) of the household refrigeration appliance (1) and a wall portion (83a) of a lateral wall (8) of the freezer compartment (8) oriented in the depth direction of the household refrigeration appliance (1).

11. Household refrigeration appliance (1) according to claim 10, **characterised in that** the course of the air gap portion (21) has two, in particular stepped, changes in direction.

12. Household refrigeration appliance (1) according to one of the preceding claims, **characterised in that** the inner container (4) is embodied in one piece, in particular as a deep-drawn component, with the walls bounding the refrigerator compartment (5) and the freezer compartment walls (7 to 11).

13. Household refrigeration appliance (1) according to one of the preceding claims, **characterised in that** a front end of the air gap (18) facing away from the interior of the freezer compartment (6) is bounded in the closed state of the freezer compartment door (15) by a seal (22) between the freezer compartment door (15) and a freezer compartment wall (7 to 11).

## Revendications

1. Appareil frigorifique ménager (1) avec un compartiment de réfrigération (5) délimité par les parois d'un contenant intérieur (4) et frontalement par une porte (16) et un compartiment de congélation (6) exécuté dans le compartiment de réfrigération (5), délimité par les parois du compartiment de congélation (7 à 11) et frontalement par une porte du compartiment de congélation (15), dans lequel le compartiment de congélation (6) est exécuté à l'intérieur du compartiment de réfrigération (5), le compartiment de réfrigération (5) et la porte du compartiment de congélation (15) pouvant être fermés par la porte (16) exécutée pour la fermeture frontale du compartiment de réfrigération (5) et pour la couverture de la porte du compartiment de congélation (15), et dans lequel à l'état fermé de la porte du compartiment de congélation (15), une fente d'aération (18) est constituée entre celle-ci et au moins une paroi de compartiment de congélation voisine (7 à 11), **caractérisé en ce que** la fente d'aération (18) présente, au moins dans une demi-longueur (19) dirigée vers un espace intérieur du compartiment de congélation (6), une section de fente d'aération (21) s'étendant de façon non rectiligne.

2. Appareil frigorifique ménager (1) selon la revendication 1, **caractérisé en ce que** le tracé de la section de fente d'aération (21) présente au moins un changement de direction.

3. Appareil frigorifique ménager (1) selon la revendication 2, **caractérisé en ce que** le changement de direction est exécuté selon un angle situé entre 20° et 120°, en particulier entre 85° et 95°.

4. Appareil frigorifique ménager (1) selon l'une des revendications précédentes, **caractérisé en ce que** le tracé non rectiligne de la section de fente d'aération (21) est constitué par au moins un échelon dans la paroi du compartiment de congélation (7, 8, 9) voisine de la porte du compartiment de congélation (15) et délimitant la fente d'aération (18).

5. Appareil frigorifique ménager (1) selon la revendication 4, **caractérisé en ce que** l'au moins un échelon est exécuté en une seule pièce dans la paroi du compartiment de congélation (7, 8, 9).

6. Appareil frigorifique ménager (1) selon la revendication 5, **caractérisé en ce que** la paroi du compartiment de congélation (7, 8, 9) avec l'au moins un échelon est une pièce emboutie.

7. Appareil frigorifique ménager (1) selon l'une des revendications précédentes, **caractérisé en ce qu'**une section de fente d'aération non rectiligne (21) est exécutée entre une paroi inférieure (17) de la porte du compartiment de congélation (15) et une paroi inférieure (9) du compartiment de congélation (6) et/ou entre au moins une paroi latérale (25) de la porte du compartiment de congélation (15) et une paroi latérale (7, 8) du compartiment de congélation (6).

8. Appareil frigorifique ménager (1) selon l'une des revendications précédentes, **caractérisé en ce qu'**une extrémité de la section de fente d'aération (21) dirigée vers l'espace intérieur du compartiment de congélation (6) est l'extrémité arrière de la fente d'aération (18) et une sortie (21a) de la section de fente d'aération (21) observée dans le sens d'une section horizontale est limitée par une paroi (24) de la porte du compartiment de congélation (15) orientée dans le sens de la largeur (sens des x) de l'appareil frigorifique ménager (1) et une section de paroi (82a) d'une paroi latérale (8) du compartiment de congélation (6) orientée dans le sens de la largeur de l'appareil frigorifique ménager (1).

9. Appareil frigorifique ménager (1) selon la revendication 8, **caractérisé en ce que** le tracé de la section de fente d'aération (21) présente un seul changement de direction, en particulier échelonné.

10. Appareil frigorifique ménager (1) selon l'une des revendications 1 à 7, **caractérisé en ce qu'**une extrémité de la section de fente d'aération (21) dirigée vers l'espace intérieur du compartiment de congélation (6) est l'extrémité arrière de la fente d'aération (18) et une sortie (21a) de la section de fente d'aération (21) observée dans le sens d'une section horizontale est limitée par une section de paroi (25c) arrière d'une paroi latérale (25) de la porte du compartiment de congélation (15) orientée dans le sens de la profondeur (sens des z) de l'appareil frigorifique ménager (1) et une section de paroi (83a) d'une paroi latérale (8) du compartiment de congélation (8) orientée dans le sens de la profondeur de l'appareil frigorifique ménager (1).

11. Appareil frigorifique ménager (1) selon la revendication 10, **caractérisé en ce que** le tracé de la section de fente d'aération (21) présente deux changements de direction, en particulier échelonnés.

12. Appareil frigorifique ménager (1) selon l'une des revendications précédentes, **caractérisé en ce que** le contenant intérieur (4) est exécuté en une seule pièce, en particulier sous forme de pièce emboutie avec les parois délimitant le compartiment de réfrigération (5) et les parois du compartiment de congélation (7 à 11).

13. Appareil frigorifique ménager (1) selon l'une des revendications précédentes, **caractérisé en ce qu'**une extrémité avant de la fente d'aération (18) éloignée de l'espace intérieur du compartiment de congélation (6) est délimitée à l'état fermé de la porte du compartiment de congélation (15) par un joint (22) entre la porte du compartiment de congélation (15) et une paroi du compartiment de congélation (7 à 11).
